Europäisches Patentamt

European Patent Office

Office européen des brevets

(19)

(11) EP 0 817 110 A2

(12) EUROPEAN PATENT APPLICATION

(43) Date of publication:
07.01.1998 Bulletin 1998/02

(51) Int Cl.6: G06K 11/16

(21) Application number: 97660066.8

(22) Date of filing: 12.06.1997

(84) Designated Contracting States:
CH DE ES FR GB LI NL SE

(30) Priority: 28.06.1996 FI 962692

(71) Applicant: NOKIA MOBILE PHONES LTD.
02150 Espoo (FI)

(72) Inventors:
• Terho, Mikko
33820 Tampere (FI)

• Lekkala, Jukka
33730 Tampere (FI)
• Poramo, Risto
33500 Tampere (FI)

(74) Representative: Johansson, Folke Anders
Nokia Mobile Phones Ltd.,
P.O. Box 100
00045 Nokia Group (FI)

(54) Terminal device with touch screen

(57)    The scope of the present invention is touch sensitive display construction (50), in connection of which touch sensitive element (20, 40) is used. In touch sensitive display construction (50) according to the invention touch sensitive element (20, 40) has been placed in a protected space under display (12, 101). When display (12, 101) is touched, the force is transferred to touch sensitive film (20, 40) through display (12, 101). For the detection of touching preferably e.g. EMF- (Electro Mechanical Film) film (20, 40, 106) is used and as a display e.g. a LCD-display.

Fig. 5

## Description

This invention relates to a terminal device, which comprises a touch screen for displaying information and for inputting information to the terminal device, and to a touch screen which comprises, arranged one after another, a display unit and force sensitive means for detecting a touch based on force, and in which the force sensitive means have been arranged behind the display unit.

A "touch screen" display is a display capable of functioning as an output and input interface of a user interface, in other words both as a display and e.g. as a keypad. By means of a touch screen a user can input information or select a desired function by touching the surface of the display either with his fingers or with e.g. a plastic pointed pen. Typically, in conjunction with a touch screen text based menus or icons are used, and by touching the surface of the display on top of them the user can activate desired functions. A touch screen can be realized in many methods. Touching of the screen can be detected e.g. using infrared rays and light detectors arranged in front of the display aligned to cross each other. This method is used mainly in connection with large displays equipped with a cathode ray tube, such as computer monitors. A touch can also be detected using capacitive or resistance measurements utilizing transparent foils mounted on the surface of a display.

At present very common display solutions especially in small devices are LCD's (Liquid Crystal Displays). They are thin displays consisting of transparent electrodes, a medium containing liquid crystals and polarization filters. One of the most common structures is the so called "twisted nematic" type of LCD display. In it the molecules of the liquid layer arranged between glass plates are directed in desired direction using control voltages, causing the optical characteristics of the display elements to change and generate the desired figure in the display.

A very common method of realizing a touch screen is to arrange a touch sensitive surface on a LCD display. It is most usually realized by mounting a transparent, touch sensitive film on the surface of a LCD display, the electrical characteristics of which film change when the film is touched. The force caused by a touch directed at the film is usually detected through resistance measurement from measuring points arranged in the touch sensitive film. These solutions are used e.g. in electronic pocket computers, which are commonly called PDA (Personal Digital Assistant) devices. When touch sensitive, transparent films mounted on the surface of a LCD display are used the quality of the LCD display suffers because films cause optical distortions and among other things reduce the contrast of the display. Additionally, these touch sensitive surfaces are sensitive to wear and damage.

In patent publication US 5,105,186 the above mentioned problems are strived to solve by means of a touch sensitive display based upon optical detection. The solution presented in said patent publication is a LCD display under which a semitransparent reflector has been installed. Under the semitransparent reflector are placed the means for light detection, e.g. a matrix of light sensitive LDR (Light Dependent Resistor) resistors. By means of these detectors it is strived for to detect touching of the LCD display by measuring the amount of light reaching the light detectors, because e.g. when the display is touched with a finger a shadow is formed and passing of light from the location of the finger is blocked. However, measurement based upon the amount of light is laborious because changes of environmental light, the direction from which light is received and the position of the display greatly impede reliable detection. Additionally, in poor lighting conditions the detection is not necessarily successful at all. An essential component of a LCD display, a reflector placed under the display, has in the arrangement according to said patent publication been forced to be replaced by a semitransparent reflector. Because of this the contrast of the LCD display does not reach the same level that it would be if the reflector had been realized traditionally, e.g. by using a mirror. By using the solution described in said patent publication part of the problems of traditional touch screens described in the previous section, such as wear of the touch sensitive film and risk of damage, can be avoided. The described solution, however, includes new disadvantages, such as unreliable detection and reduced contrast.

Now a touch screen has been invented, through using of which the above described problems can be reduced. In the display construction according to the invention a touch sensitive element is placed under the display, seen from the side of the touching surface. When the display is touched it bends and transfers a mechanical impulse to the touch sensitive element. From the touch sensitive element the impulse is decoded utilizing the means of detection arranged in connection with the element. The touch sensitive element is placed under the display and thus the invention preferably does not limit the optical characteristics of the display. With this method a high quality touch screen can be attained, which, due to its low manufacturing cost, is suitable for a multitude of applications. The invention is preferably applicable for realization as a combination of a touch sensitive EMF- (Electro Mechanical Film) film and a LCD display, but also other elements with corresponding characteristics can be used.

It is characteristic to the terminal device and the touch screen according to the invention that the touching surface of the display unit of the touch screen has been arranged to form the touching surface to receive the touch.

The invention is described in more detail in the following with reference to enclosed drawings, in which

Figure 1 presents the components and structure of a LCD display of "twisted nematic" type,

figure 2 presents the structure of a touch sensitive EMF- (Electro Mechanical Film) film,

figure 3 presents a charge amplifier used for amplifying the impulse generated by an EMF film,

figure 4 presents an alternative structure of an EMF film and distribution of charges inside the film,

figure 5 presents a touch screen according to the invention and its components,

figure 6 presents an exemplary realization used at testing of the touch screen according to the invention,

figures 7A and 7B present test results of the touch screen according to the invention

figures 8A and 8B present ways of realizing electrodes applicable for use in a touch screen according to the invention,

figures 9A and 9B present processing of impulses received from the electrodes of an EMF film and detection of a touch, and

figures 10A to 10E present applying of the touch screen according to the invention to a terminal device.

In the following the invention is described in detail using as an example one preferable embodiment of the touch screen, in which a LCD display is used as the display and an EMF film is used as the touch sensitive element.

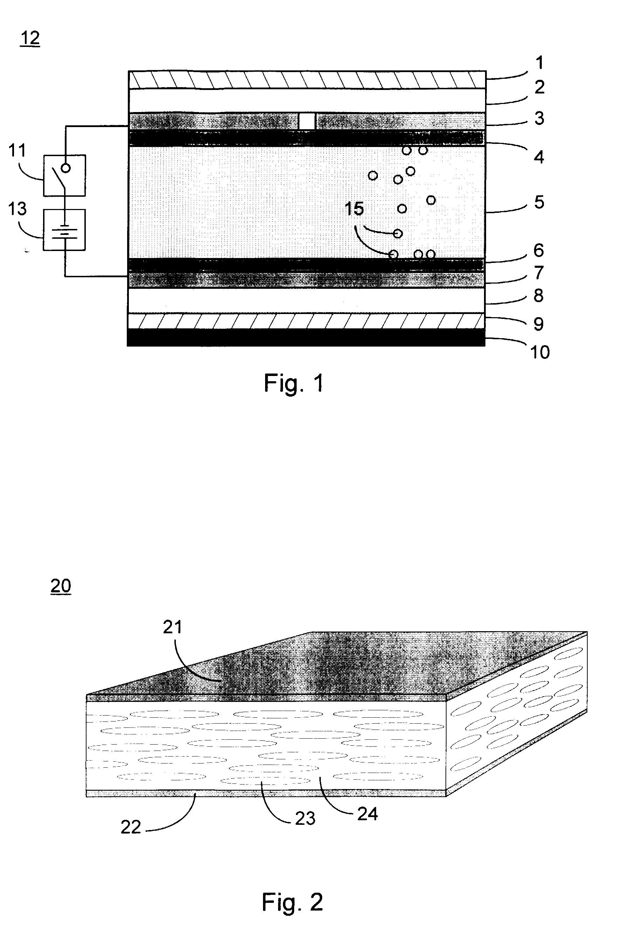

Figure 1 presents a cross section of the most commonly used liquid crystal display 12 of the so-called "twisted nematic" type. Liquid crystal display 12 consists of transparent electrodes 3, liquid crystal layer 5 containing liquid crystal molecules 15, and polarization filters 1 and 9. Closest to the user of the display (topmost in the figure) is polarization filter 1, which is on top of the glass plate 2 protecting liquid crystal layer 5. Electrodes 3 (the patterns seen in the display) are arranged under glass plate 2 using a conductive, transparent layer (e.g. indiumtinoxide, ITO). So-called orientation layer 4 has been integrated on the surface of electrode 3. Liquid crystal molecules 15 in liquid crystal layer 5 touching it are oriented and in this way orient the molecules in whole liquid crystal layer 5 (the layer between orientation layers 4 and 6 containing liquid crystal molecules 15) in a desired way. On the other side of liquid crystal layer 5 there is orientation layer 6, and as next transparent electrode 7, alike electrode 3. The next layer is protective glass layer 8, in the bottom surface of which polarization filter 9 is arranged. The polarization axis of polarization filter 9 is essentially parallel to the polarization axis of polarization filter 1. On the other side of polarization filter 9 there is reflector 10, which in the figure reflects light upward.

An electric field controlling the display is arranged by connecting an electric field, using voltage supply 13 and switch 11, between display elements, or electrodes 3 and electrode 7, arranged in desired pattern. The function of a liquid crystal display is based upon the phenomenon that when there is no electric field in the display, light passes through layers 1 to 9 and is reflected back from reflector 10. In this case the background of the display seems light. When control voltage 13 in connected between electrodes 3 and 7, the electric field generated by it turns liquid crystal molecules 15 in medium 5 in such a way that light polarized in polarization filters 1 and 9 cannot pass through the structure but is absorbed in the structure. In this case the background next to electrode 3 seems black. Different grades of darkness can be obtained by regulating the level of the control voltage. This is the description of the function of a monochrome display, but there is nothing to limit using the invention in connection with color displays and displays of other types.

Figure 2 presents the structure of EMF (Electro Mechanical Film) 20. EMF film 20 is a bi-axially oriented plastic film 24, in which micro-bubbles 23 have been formed in manufacturing stage. One method of manufacturing EMF-film is to add on purpose impurities into plastic 24 in manufacturing stage, which cause small cracks (microbubbles 23) in plastic 24 when the film is stretched. The bi-axial orientation of microbubbles 23 has been achieved by stretching the plastic film during production in both breadth- and longitudinal directions, causing the microbubbles 23 to become flat and oval. Typically microbubble 23 is approximately 100 μm in diameter and approximately 0,5 μm in thickness.

In manufacturing plastic film 24 has been made an elecret by creating through corona discharge inside plastic film 24 a permanent charge of e.g. approximately 1 mC/m$^2$. In corona discharge, due to a very strong electric field, air is ionized and free charges are trapped in potential pits born in the boundary surfaces of microbubbles 23 and plastic 24. On both sides of EMF-film 20 there are thin, either vapour-deposited or laminated metal film electrodes 21, 22. The structure and manufacturing method of EMF-film 20 are described in patent publication US 4,654,546. A force or pressure directed at EMF-film 20 initiates a change of internal charge distribution, which is seen as a corresponding change of mirror charge distribution on electrodes 21 and 22.

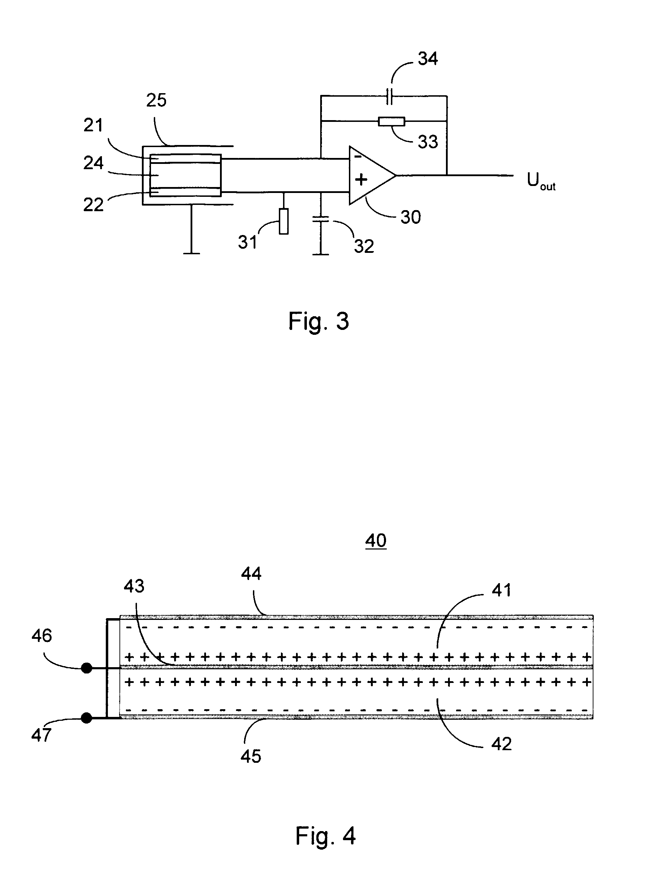

A change in mirror charge distribution can be measured using several methods. One of the methods is to measure the voltage between electrodes 21 and 22. The internal resistance of an EMF-film is in the order of giga- or teraohms, and accordingly, in order to achieve good measurement results, the input impedance of the measuring amplifier should be at least megaohms, but preferably tens or hundreds of megaohms. This sets high requirements on the measuring equipment. A more preferable method of measuring the change of charges in EMF-film 20 is to use a charge amplifier presented in figure 3. In charge amplifier 30 the current between electrodes 21, 22 of the film is measured in short-circuit. The charge amplifier connection (figure 3) comprises operation amplifier 30, resistors 31 and 33 and capacitors 32 and 34. Resistor 31 and capacitor 32 are used for balancing the input impedances of operation amplifier 30 and they do not affect the transfer function of the connection. Resistor 33 is used for limiting D.C.-amplification. The inputs of operation amplifier 30 are connected to electrodes 21 and 22 of EMF-film 20. In the output of the charge amplifier connection it is obtained an output voltage, proportional to the variation of force or pressure on EMF-film 20, $\Delta U$, or:

$$\Delta U_{out} = \frac{\Delta Q}{C} \qquad (1)$$

, in which $\Delta Q$ is the change of charge between electrodes 21 and 22 of EMF-film 20 and C is the capacitance of capacitor 34.

EMF-film 20 can be used in a structure according to figure 2 by adding protective arrangement 25 (figure 3) on the measuring electrodes. Protective arrangement 25 can be e.g. a thin metal or plastic sheet, which protects thin electrodes 20, 21 electrically (EMC, Electromagnetic Compatibility) and/or mechanically. Figure 4 presents so called dual EMF-film 40. Its middle electrode 43 acts as common "hot" electrode 43 for two functional film halves 41 and 42, and outer electrodes 44 and 45 form an earthed protection. As to their functions, common electrode 43 corresponds to electrode 22 of the alternative embodiment presented in figures 2 and 3, and outer electrodes 44 and 45, connected together, correspond to electrode 21. The change of charge distribution between electrode 43 and pair of electrodes 44 and 45 is detected correspondingly by connecting outputs 46 and 47 of dual EMF-film 40 to the inputs of charge amplifier 30 as presented in figure 3.

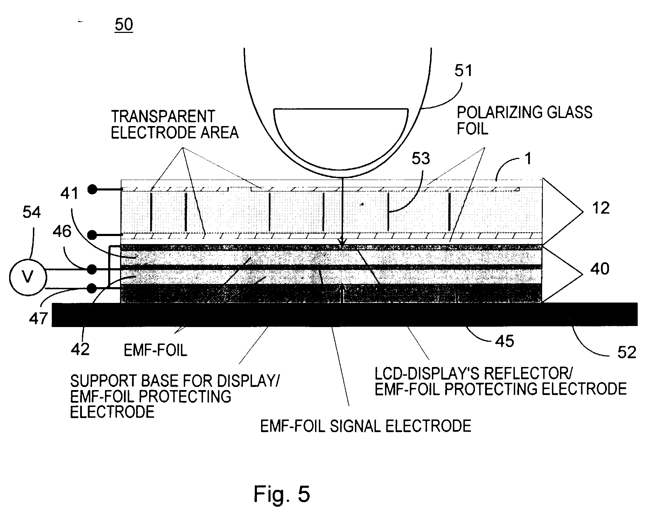

Figure 5 presents the structure of touch screen 50 according to the invention, in which dual EMF-film 40 has been placed under LCD-display 12. In this case, when finger 51 presses polarization filter 1 on the top surface of LCD-display 12, LCD-display 12 bends and directs the force further to EMF-film 40. Because protective electrode 45 of EMF-film 40 against support base 52 and support base 52 together form a firm surface, which is, in comparison with EMF-film 40, essentially unyielding, EMF-film 40 is pressed together at the location of finger 51.

The force cause by pressing generates a potential difference between outputs 46 and 47, as described in the explanation of figure 2. A touch can in this way be recognized by measuring the voltage between outputs 46 and 47 using e.g. a charge amplifier according to figure 3 and voltage meter 54 prior known to a person skilled in the art. It is prior known to mount support studs 53 in LCD-displays 12. The number of support studs 53 can be increased in LCD-display 12 in order to eliminate eventually appearing disturbances caused by touches, and especially to raise the resolution of the touch detection of the touch screen according to the invention. The more support studs 53, the higher accuracu for the detection of the touch can be achieved.

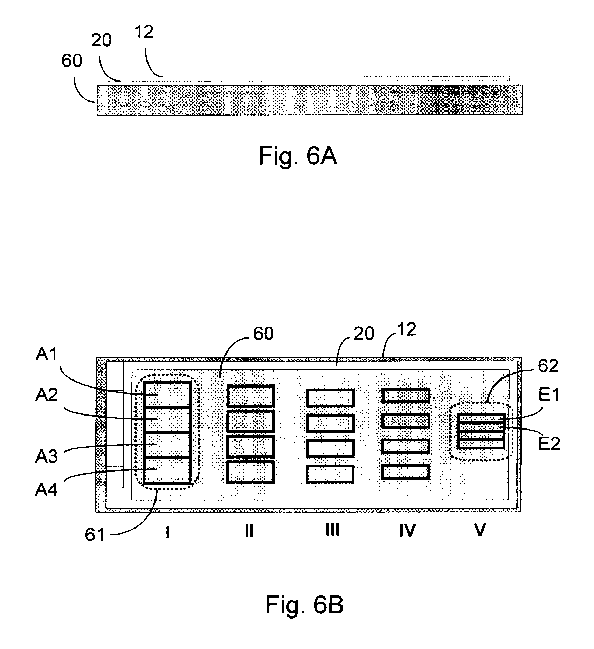

The function of touch screen 50 has been tested using a test construction. Figure 6A presents a side view of the test construction used and figure 6B presents it from above, or seen from the direction of the touch surface of the display. The bottom of the test construction is formed by a thick plate of aluminium 60. Thick bottom plate 60 prevents the construction from bending during measuring. EMF-film 20 has been glued on the aluminum plate 60. Correspondingly, LCD-display 12 has been glued on top of EMF-film 20. In electrode 21 (an aluminum foil) of EMF-film 20 a pattern presented in figure 6B has been burned, which pattern comprises ao. electrode area 61 formed by four individual electrodes A1 to A4. Electrode area 61 used in the test was approximately 15 mm wide and approximately 32 mm high, the height of each electrode being approximately 8 mm. There are also four other corresponding groups of four electrodes A1 to A4, but of different dimensions. In the figure they have been marked II to V. The construction presented in figure 6 was tested by measuring the signals from each electrode A1 to A4 while pressing LCD-display 12 at individual electrodes A1 and A2. A corresponding measuring was done also to electrode groups II to V and the measuring results were essentially similar to those from electrode area 61. The smallest electrodes E1 and E2 of electrode area 62 were approximately 2 mm high and 15 mm wide, but according to the measuring results the size of electrodes A1 to A4, E1 - E2 to be used can be further reduced and in this way the touch detection accuracy can be improved.

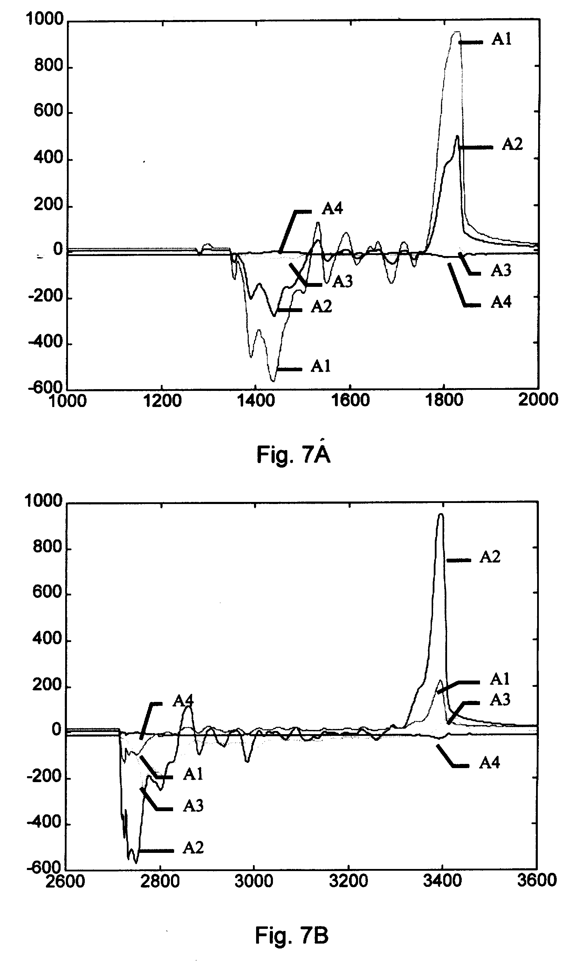

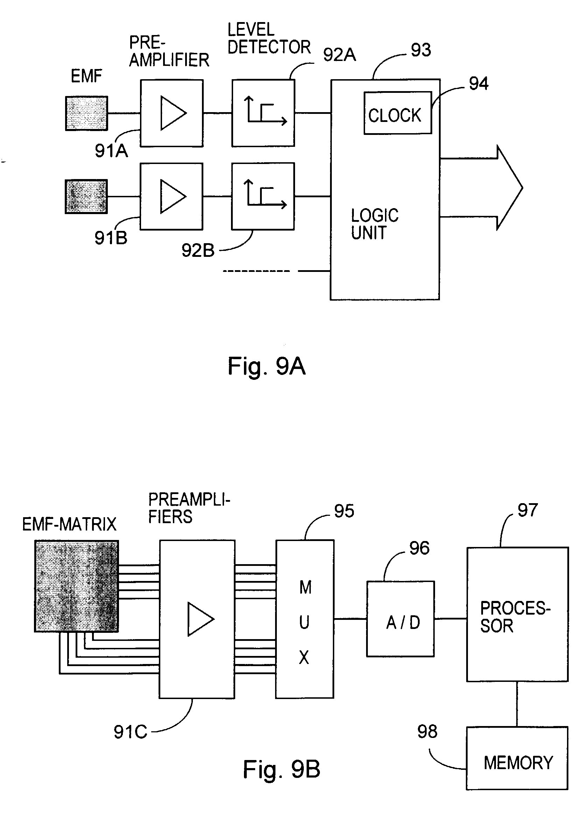

Figure 7A presents the relative signal strengths produced by individual electrodes A1 to A4 when the touch sensitive display construction 50 is pressed at electrode A1. One can observe from figure 7A that when finger 51 touches the surface (polarization filter 1) of LCD-display 12, a downward signal peak is produced. Correspondingly, when the finger leaves LCD-display 12, there is an upward signal peak. The result proves clearly that the signal produced by electrode A1 on the touched area is clearly stronger than the signal produced by electrode A2 next to A1. In this way an area pressed by finger can easily be detected using a simple level detector 92A, 92B (figure 9A). Correspondingly, figure 7B presents the signals produced by electrodes A1 to A4 when LCD-display 12 is pressed at electrode A2. Now, on its turn, the signal produced by electrode A2 is the strongest one, and thus it can be identified by the level detector. In both figures the scale on the horizontal axis presents touch time and removal time in milliseconds and the values on the vertical axis present the relative voltages from electrodes A1 to A4. It has been proved by the measurements that touching surface 1 of display 12 is transferred through display 12 to EMF-film 20, 40.

The sensitivity of a typical EMF-film is approximately 27 pC/N, but the values vary depending on the structure of the film and on manufacturing process. In the touch sensitive display construction 50 according to the invention the coupling used for detecting a touch is capacitive, meaning that dual EMF-film 40 reacts to changes of forces directed at the film, not to an even pressing force or pressure. It is exactly like this that also single EMF-film 20 operates. Detection based upon the change of force preferably makes possible collecting of versatile information from changes of potential differences measured between electrode (figures 4 and 5) outputs 46 and 47.

Because a potential difference is proportional to the force directed at EMF-film 40, it is possible to realize touch sensitive display construction 50, in which pressing LCD-display 12 using a different force initiates a different function. This feature according to the invention can be utilized e.g. in a situation in which it is wanted to acknowledge that information supplied by touching LCD-display 12 has been input correctly. In this case, by pressing LCD-display 12 strongly at a chosen point, or if so desired, at any point, a certain input acknowledgment function is executed. A stronger pressing of LCD-display 12 is detected e.g. by using a multi-level detector. Equally, a multi-level level detector can be used in devices of different types to eliminate too big forces directed at a LCD-display. In this case damage to LCD-display 12 can preferably be avoided by generating a warning signal when the signal detected from EMF-film 20, 40 exceeds a certain, predetermined limit value.

Detection according to the invention, based upon detection of change of force directed at touch sensitive display construction 50, is very fast and accurate, and it operates as well while pressing the display with a finger as when removing the finger from the display surface. Thus the duration of a press is easy to define. Each of the 12 sections of LCD-display 12 of touch sensitive display construction 50 can thus be allocated several functions, dependent on the duration of a press. The ability to indicate pressing and lifting of finger, and the locations at which they occur, makes it possible to realize also the "drag and drop" function prior known from computers. In the "drag and drop" function e.g. the user of a computer presses a mouse button with his finger and keeps it down, causing the pointer to capture the display element at which the pointer was at the moment. After this the user can drag the element he selected to a desired point and release it by lifting his finger from the mouse button. According to the same principle the touch sensitive display structure 50 according to the invention makes it possible to move effortlessly text strings or graphics figures in LCD-display 12 by just moving a finger or a special pointing device on the surface of LCD-display 12.

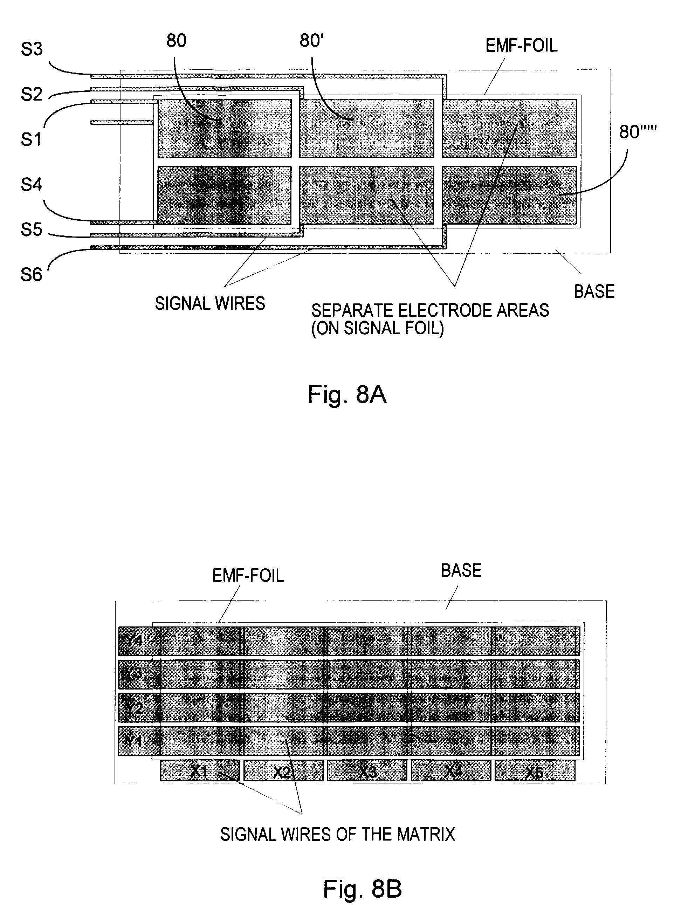

Figures 8A and 8B present two different ways of creating patterns on conducting film 21, 22, 44 on the surface of EMF-film 20, 40. If the information handled with the display does not require high resolution, which is the case if only a few separate graphic icons for selecting certain functions are generated in the display, it is preferable to arrange for each area intended to be pressed individual electrodes 80 to 80"" as presented in figure 8A. In this case there is an individual signal amplifier for each area, e.g. a charge amplifier according to figure 3. In this case each press is corresponded by individual signal S1 to S6. If high resolution is required it is useful to detect touching of touch sensitive display construction 50 using a matrix, through using of which the number of signals Y1 to Y4 and X1 to X5 can preferably be reduced, as each area to be indicated does not require an electrode of its own. In this embodiment presented in figure 8B single EMF-film 20 is used. The electrodes corresponding to horizontal rows Y1 to Y4 have been patterned in top surface 21 of this film 20. Respectively, the electrodes corresponding to vertical columns X1 to X5 have been patterned in the bottom surface 22 of film 20. One amplifier 30 is reserved for each electrode Y1 to Y4 and X1 to X5 and one terminal of each of the nine amplifiers is connected to the same potential, e.g. the negative terminal of amplifier 30 to ground potential. A contact point is detected from horizontal signals Y1 to Y4 and vertical signals X1 to X5 by comparing them with the ground potential. For example, when EMF-film 20 is pressed at point X1/Y4, a change of charges is caused between the ground potential and electrodes Y4 and X1. The change of charges initiates a change of logic status of electrodes Y4 and X1, and processor 97 detects a press at point Y4/X1. In the matrix method a higher intelligence is required of the logics used, but on the other hand savings are achieved in the amount of amplifiers 30 and electrodes Y1 to Y4 and X1 to X5.

Regardless of whether in touch sensitive display construction 50 according to the invention individual signals S1 to S4 are used for electrodes 80 to 80"" of EMF-film 20 according to figure 8A, or the matrix solution according to figure 8B, the signals obtained from electrodes 80 to 80"", Y1 to Y4 and X1 to X5 are amplified in preamplifiers 91A and 91B and preamplification stage 91C (figures 9A and 9B). It is possible to realize each preamplifier using e.g. the charge amplifier connection presented in figure 3. If there is individual signal S1 to S6 for each electrode, simple level detectors 92A and 92B can preferably be used for detection. Level detectors 92A and 92B compare the signal levels received from preamplifiers 91A and 91B with a predetermined limit value and give an indication by outputting logic "0" or "1", depending on whether the predetermined limit value was exceeded or not. If necessary, also multi-level charge amplifiers 92A and 92 B can be used, in which case it is possible to indicate also the force directed at EMF-film 20, 40 with desired accuracy. In this case indication naturally requires more bits per level detector 92A and 92B. The digital signals decoded from the outputs of level indicators 92A and 92B can be processed further in logics unit 93. By including clock 94 in connection with logic unit 95 it is possible e.g. to measure the duration of a press directed at EMF-film 20, 40. Respectively, it is possible using logic unit 95 to recognize a certain press sequence, e.g. keying in a certain code number through the surface of EMF-film 20, 40, which represents a keypad. The logic unit can be realized using components prior known to a person skilled in the art, such as PLD- (Programmable Logic Device) logic circuits and ASIC-(Application Specific Integrated Circuits) circuits. Respectively, logic unit 93 can be realized through a program executed in processor 97 and memory 98, as has been explained in connection with figure 9B.

In matrix-based detection according to figure 8B analogue multiplexer 95 is used. Analogue multiplexer 95 is a controlled analogue switch network. Analogue multiplexer 95 switches in turn signals Y1 to Y4 and X1 to X5 to A/D-converter 96 for detection of potential and registering in memory 98. Processor 97 decodes the value it has read from A/D-converter 96 and compares it with predetermined limit values, as described in the previous chapter.

The advantage of analogue multiplexing 95 is that preferably only one expensive A/D-converter 96 is required. There is nothing to prevent using several A/D-converters, but due to the fastness of multiplexer 95 and A/D-converter 96 several A/D-converters 96 are in general not required. A/D-converter 96 is connected directly to processor 97 allowing complicated algorithms to be executed in filtering and detecting signals Y1 to Y4 and X1 to X5. Examples of complicated algorithms are e.g. the earlier described "drag and drop" function and recognition of drawn graphics executed on the surface of LCD-display 12. The algorithms and other program code required by processor 116 are stored in memory 117.

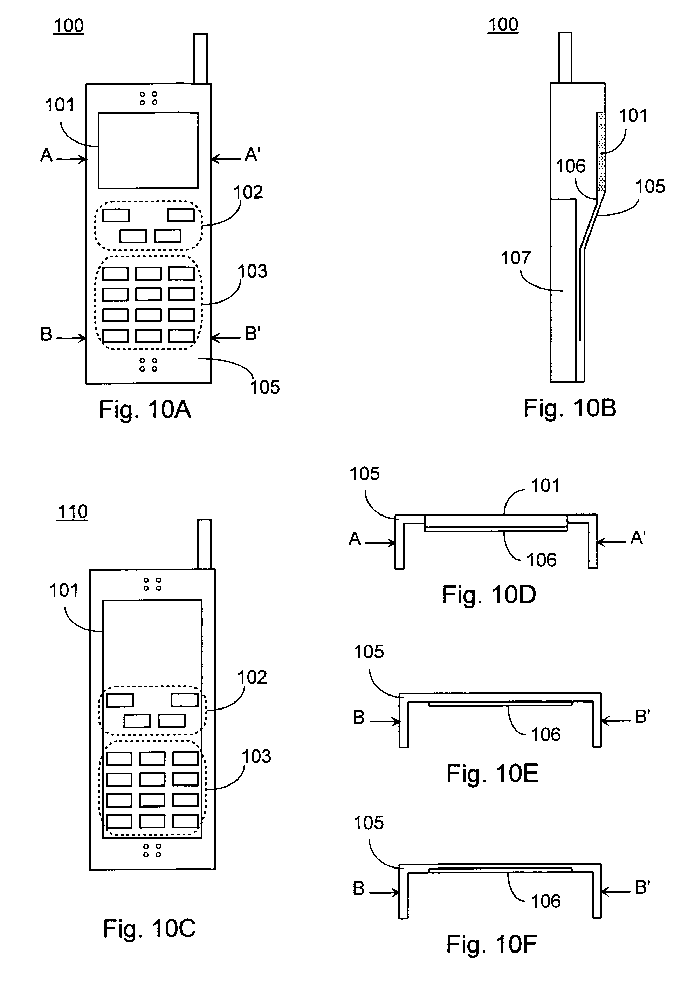

Because EMF-film 20, 40 used in touch sensitive display construction 50 according to the invention is very thin, this enables manufacturing of touch screens of very small volume. EMF-film 20, 40 can be used for detection of press such as it is, and thus it is extremely suitable for the preferable embodiment of the invention presented in figures 10A and 10B. Figure 10A presents terminal device 100, in this case it is mobile station 100. It comprises display 101, menu keys 102 and numeric keys 103. Display 101 of mobile station 100 is a touch screen (figure 5) according to the invention. EMF-film 20, 40 of the touch screen has been prolonged under keypads 102 and 103. Keypads 102 and 103 have thus been realized utilizing the same EMF-film 20,40.

Figure 10B is a side view of mobile station 100.

LCD-display 101 has been placed on top of EMF-film 106. Flexible EMF-film 106 reaches under keypads 102 and 103. EMF-film 106 is capable of recognizing, through cover 105, a pressure or a change of force directed at cover 105 of mobile station 100, enabling the realization of keypads 102 and 103 without mechanical keys/push-buttons. Seen from outside of mobile station 100 keypads 102 and 103 are actually only marks on the cover of the mobile station, produced by painting or engraving. Thus rubber mats and metal foils prior known from traditional keypads, used for example in keypads of "metallic dome"-type, are preferably not required. Because no mechanically wearing components are needed in keypads 102 and 103, they can be realized very reliable and in small space.

Additionally, because touch screen 101 and keyboards 102 and 103 have been realized using only one EMF-film 106, very low manufacturing cost is achieved. EMF-film 106 is very thin, and thus realizing keypads 102 and 103 using EMF-film 106 makes it possible to place e.g. remarkably sizable battery 107 in mobile station 100 of small outer dimensions.

Figure 10C presents mobile station 110, in which touch screen 50 according to the invention is utilized. In this embodiment whole display 101 has been realized utilizing touch screen 50. Both keypads 102 and 103 have been realized using symbols generated in LCD-display 12. This embodiment makes it possible to generate large graphic pictures in the display, or alternatively tens of lines of text can be displayed in display 12.

Figure 10D presents cross section A-A' of mobile station 100 presented in figure 10A. Cross section A-A' has been made at the location of display 101. LCD-display 101 has been integrated in cover 105 and EMF-film 106 is located immediately under LCD-display 101. Figure 10E correspondingly presents cross section B-B' at the location of keypad 103. In this figure it can be noticed how EMF-film 106 has been fixed directly to the bottom surface of cover 105. The fixing can be done e.g. using glue but it is also possible already at the manufacturing stage to integrate EMF-film 106 directly into the surface of cover 105. Figure 10F presents another embodiment, in which EMF-film 106 has been integrated inside cover 105. It is the more preferable for the operation of EMF-film 106 the closer to the outer surface of the cover EMF-film 106 has been placed. It is also possible to place EMF-film 106 on the outer surface of cover 105. In this case, however, one has to make sure that a sufficient protective film is arranged on top of electrode 21, 44 of EMF-film 20, 40, 106 to prevent damage to electrodes 21, 44.

This has been a presentation of realization and embodiments of the invention using examples. It is obvious to a person skilled in the art that the invention is not limited to the details of the above presented embodiments and that the invention can be realized also in another embodiments without deviating from the characteristics of the present invention. The above presented examples should be regarded as illustrating, not as limiting. Thus the possibilities of realizing and using the invention are limited only by enclosed patent claims. Thus the various embodiments of the invention defined by the claims, including equivalent embodiments, are included in the scope of the invention.

**Claims**

1. Terminal device (100, 110), which comprises a touch screen (101) for displaying information and for inputting information to the terminal device (100, 110), which touch screen (101) comprises, arranged one after another, a display unit (12) and force sensitive means (20, 40, 106) for detecting a touch based on force, the force sensitive means (20, 40, 106) have been arranged behind the display unit (12) seen from the side of touching surface (1), and the display unit (12) has been arranged to transfer force to the force sensitive means (20, 40, 106), **characterized** in that the display unit (12) has been arranged to form the touching surface (1) of the touch screen (101) for receiving the touch.

2. Terminal device (100, 110) according to claim 1, **characterized** in that it is a mobile terminal.

3. Terminal device (100, 110) according to claim 1, **characterized** in that the display unit (12) is a LCD-display (12).

4. Terminal device (100, 110) according to claim 1, **characterized** in that the force sensitive means (20, 40, 106) is an EMF- (Electro Mechanical Film) film.

5. Terminal device (100, 110) according to claim 1 or 4, **characterized** in that metal film electrodes (21, 22, 80-80"") having separate conducting wires (S1-S6) have been arranged on top of the force sensitive means (20, 40, 106) to indicate the touch and the location of the touch (1).

6. Terminal device (100, 110) according to claim 1 or 4, **characterized** in that parallel, oblong first metal film electrodes (21, Y1, Y2, Y3, Y4) having conducting wires (Y1, Y2, Y3, Y4) have been arranged on top of a first surface (21) of the force sensitive means (20, 40, 106), parallel, oblong second metal film electrodes (22, X1, X2, X3, X4, X5) having conducting wires (Y1, Y2, Y3, Y4) have been arranged on top of a second surface (22) of said force sensitive means (20, 40, 106), the first metal film electrodes (21, Y1, Y2, Y3, Y4) and the second metal film electrodes (22, X1, X2, X3, X4, X5) are essentially in perpendicular position towards each other, and that the first metal film electrodes (21, Y1, Y2, Y3, Y4) and the second metal film electrodes (22, X1, X2, X3, X4, X5) form a matrix structure to indicate the touch and the location of the touch (1).

7. Terminal device (100, 110) according to claim 1, **characterized** in that the force sensitive means (20, 40, 106) have been arranged behind the keys (102, 103), marked in the cover (105) of the terminal device (100, 110), for detecting pressing of the keys (102, 103) based upon force, through the cover (105), and that the force sensitive means (20, 40, 106) have been placed in one of the following parts of the terminal device (100, 110): the inner surface of the cover (105) and the cover (105).

8. Touch screen (101) for displaying information and for inputting information, which comprises, arranged one after another, a display unit (12) and force sensitive means (20, 40, 106) for detecting a touch based on force, the force sensitive means (20, 40, 106) have been arranged behind the display unit (12) seen from the side of touching surface (1), and the display unit (12) has been arranged to transfer force to the force sensitive means (20, 40, 106), **characterized** in that the display unit (12) has been arranged to form the touching surface (1 ) of the touch screen (101) to receive the touch.

9. Method of detecting a touch and the location of the touch in connection with a terminal device (100, 110) having a touch screen (101), in which

- the touch and the location of the touch (1) is detected by touch sensitive means (20, 40, 106) located behind the display unit (12) of the touch screen (101),
- said display unit (12) is transferring force to the touch sensitive means (20, 40, 106),

**characterized** in that

- the surface (1) of the display unit (12) receives the touch of the user of the terminal device (100, 110).

12

1
2
3
4
5
15
6
7
8
9
10

11

13

Fig. 1

20

21
22
23
24

Fig. 2

Fig. 3

Fig. 4

50

51

TRANSPARENT
ELECTRODE AREA

POLARIZING GLASS
FOIL

53

1

41

54

12

46

40

V

47

45

52

42    EMF-FOIL

SUPPORT BASE FOR DISPLAY/
EMF-FOIL PROTECTING
ELECTRODE

LCD-DISPLAY'S REFLECTOR/
EMF-FOIL PROTECTING ELECTRODE

EMF-FOIL SIGNAL ELECTRODE

Fig. 5

Fig. 6A

Fig. 6B

Fig. 7A

Fig. 7B

S3

80    80'    EMF-FOIL

S2

S1    80''''

S4

S5

S6

SIGNAL WIRES    SEPARATE ELECTRODE AREAS
(ON SIGNAL FOIL)    BASE

Fig. 8A

EMF-FOIL    BASE

Y4

Y3

Y2

Y1

X1    X2    X3    X4    X5

SIGNAL WIRES OF THE MATRIX

Fig. 8B

PRE-
AMPLIFIER

LEVEL
DETECTOR    92A                    93

EMF                                              94

                                        CLOCK

91A

                                        LOGIC
                                        UNIT
91B

92B

Fig. 9A

PREAMPLI-
FIERS                    95                              97

EMF-MATRIX                                    96

                                                    PROCES-
M   A / D                                        SOR
U
X

91C                                                      98

                                        MEMORY

Fig. 9B

Fig. 10A

Fig. 10B

Fig. 10C

Fig. 10D

Fig. 10E

Fig. 10F